# EUROPEAN PATENT APPLICATION

(11) **EP 4 737 162 A1**
(43) Date of publication of application: **06.05.2026**
(21) Application number: 24868242.9
(22) Date of filing: 17.09.2024
(51) Int. Cl.: B60K 1/04, B60K 11/02, B60L 50/60, B60L 58/18, B60L 58/24, H01M 10/613, H01M 10/625, H01M 10/6567, H01M 50/204, H01M 50/249, H01M 50/271, H01M 50/298

(54) **ELECTRIC DUMP TRUCK**

(30) Priority: 20.09.2023 JP 2023151860
(71) Applicant: Hitachi Construction Machinery Co., Ltd., Tokyo 110-0015 (JP)
(72) Inventor: KANAYA, Yosuke, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Yohei, Tsuchiura-shi, Ibaraki 300-0013 (JP); SAIJO, Kimihiro, Tsuchiura-shi, Ibaraki 300-0013 (JP); KIMURA, Takuya, Tsuchiura-shi, Ibaraki 300-0013 (JP); ABE, Yusuke, Tsuchiura-shi, Ibaraki 300-0013 (JP); LI, Zhi, Tsuchiura-shi, Ibaraki 300-0013 (JP); SUZUKI, Shotaro, Tsuchiura-shi, Ibaraki 300-0013 (JP)
(74) Representative: Manitz Finsterwald Patent- und Rechtsanwaltspartnerschaft mbB
(86) International application number: PCT/JP2024/033067
(87) International publication number: WO 2025/063165

(57) **Abstract**

The vehicle body frame (2) consists of a left frame (2A) and a right frame (2B) extending in the longitudinal direction, a left pillar (2C) extending upwards from the left frame (2A), a right pillar (2D) extending upwards from the right frame (2B), and a beam (2E) extending in the lateral direction and attached across the upper parts of the left pillar (2C) and the right pillar (2D). The battery device (11) is arranged between the left pillar (2C) and the right pillar (2D) with a plurality of battery modules (12). In the plurality of battery modules (12), one end side in the longitudinal direction becomes the electrical wiring connection part (12A) for connecting electrical wirings (15), and the other end side in the longitudinal direction becomes the temperature control liquid pipe connection part (12B) for connecting temperature control liquid pipes (16).

## Description

### TECHNICAL FIELD

The present invention relates to an electric dump truck suitably used for transporting crushed stones and the like mined in, for example, a mine.

### BACKGROUND ART

For the task of transporting crushed stones and the like mined in a mine, ultra-large dump trucks called mining dump trucks are used. This ultra-large dump truck is configured to include a vehicle body frame that extends in the longitudinal direction to form a support structure, left and right front wheels and left and right rear wheels attached to the vehicle body frame, and a load-carrying platform installed on the vehicle body frame for loading crushed stones and the like. The ultra-large dump truck is configured as an electric dump truck that drives an electric motor with electric power obtained by driving a generator with an engine.

Additionally, some electric dump trucks are equipped with a battery device that stores surplus electric power. This electric dump truck can drive the electric motor with the power stored in the battery device (Patent document 1).

### PRIOR ART DOCUMENT

### PATENT DOCUMENT

Patent document 1: JP 2018-188144 A

### SUMMARY OF THE INVENTION

Here, the performance of the electric dump truck is greatly influenced by the capacity of the battery device. especially, an electric dump truck not equipped with an engine for power generation can extend its operating time by efficiently mounting a large battery device on the vehicle body frame.

Patent document 1 does not describe replacing the engine with a battery, that is, mounting a battery without mounting an engine. Additionally, some battery devices are equipped with a structure for circulating a liquid (coolant, heating liquid) to adjust to a suitable temperature (temperature with good charging efficiency) . For this reason, if the location for loading, as well as the positions of wiring and piping, are not considered, the wiring and piping can become obstructions, preventing the installation of a battery device with sufficient capacity. This also presents a problem of reduced operating time.

The present invention has been made in view of the problems of the prior art described above, and an object of the present invention is to provide an electric dump truck that can extend its operating time by mounting a battery device with sufficient capacity on the vehicle body frame.

In the electric dump truck of the present invention comprises a battery device mounted on a vehicle body frame and including a plurality of battery modules arranged in the battery device. The vehicle body frame includes: left and right frames extending in a longitudinal direction; left and right pillars extending upward from the left and right frames; and a beam extending in a lateral direction and attached across a top of the left and right pillars. The battery device is arranged such that the plurality of battery modules are positioned between the left and right pillars. The plurality of battery modules have one longitudinal end serving as an electrical wiring connection part for connecting electrical wiring, and the other longitudinal end serving as a temperature control liquid pipe connection part for connecting temperature control liquid pipe.

According to the present invention, the electric dump truck can mount a battery device with sufficient capacity on the vehicle body frame, thereby extending its operating time.

### BRIEF DESCRIPTION OF THE DRAWINGS

[FIG. 1] is a left side view showing an electric dump truck according to an embodiment of the present invention.
[FIG. 2] is a left side view showing the vehicle body frame, cab, and battery device.
[FIG. 3] is a right side view showing the vehicle body frame, cab, and battery device.
[FIG. 4] is a front view showing the vehicle body frame, cab, and battery device.
[FIG. 5] is a plan view showing the vehicle body frame, cab, and battery device.
[FIG. 6] is a perspective view showing the battery device, junction box, etc.
[FIG. 7] is a perspective view showing the junction box, etc., with the box cover removed.

### MODE FOR CARRYING OUT THE INVENTION

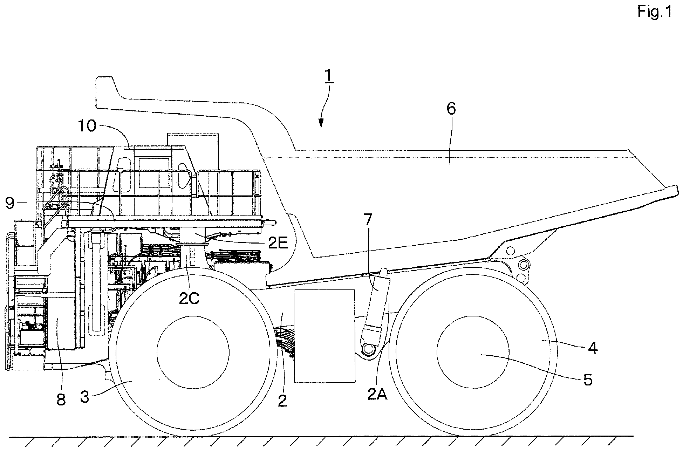

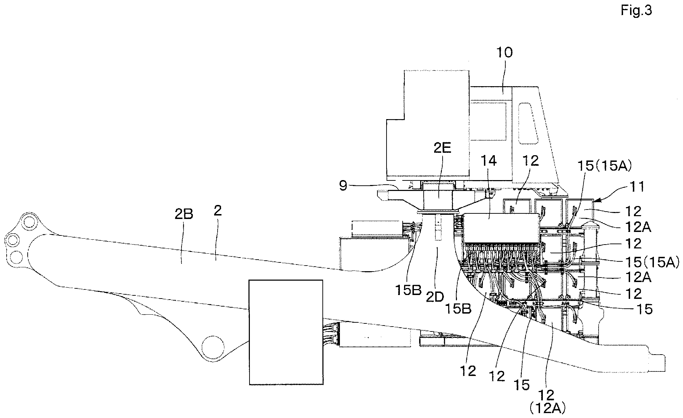

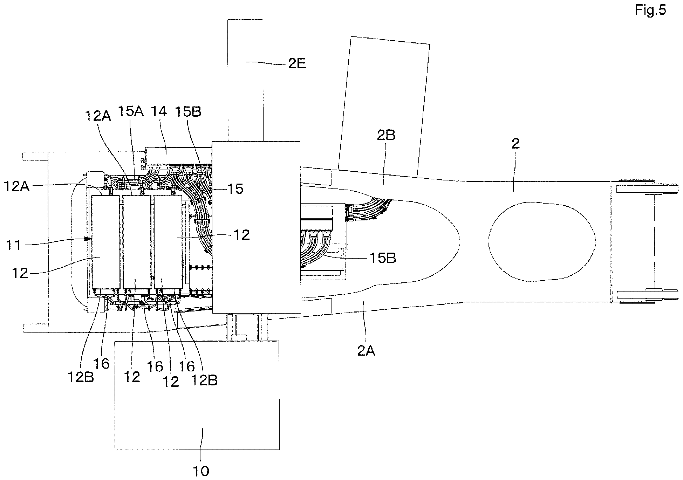

Hereinafter, the electric dump truck according to an embodiment of the present invention will be described in detail with reference to FIGS. 1 to 7. The electric dump truck is equipped with a battery device that stores electric power for driving the travel electric motor. In this battery device, for example, electric power drawn from an overhead wire using a current collector is charged (trolley system).

In FIG. 1, the electric dump truck 1 is an ultra-large dump truck for transporting crushed stones and the like mined in a mine. Here, the electric dump truck 1 is configured to include a vehicle body frame 2, front wheels 3, rear wheels 4, a load-carrying platform 6, a hoist cylinder 7, a cab 10, a battery device 11, electrical wiring 15, and temperature control liquid pipe 16, as described later.

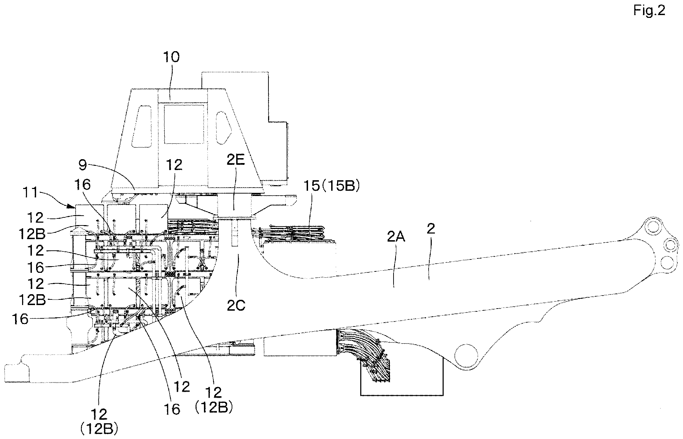

The vehicle body frame 2 forms the main skeleton of the electric dump truck 1. The vehicle body frame 2 is a robust support structure extending in the longitudinal direction. As shown in FIGS. 2 to 5, the vehicle body frame 2 is configured to include a left frame 2A and a right frame 2B extending in the longitudinal direction with a predetermined interval in the lateral direction, a left pillar 2C extending upward from the left frame 2A, a right pillar 2D extending upward from the right frame 2B, and a beam 2E extending in the lateral direction and attached across the top of the left pillar 2C and the right pillar 2D. The left frame 2A, right frame 2B, left pillar 2C, right pillar 2D, and beam 2E are formed as box-shaped (rectangular tube-shaped) fabricated structures.

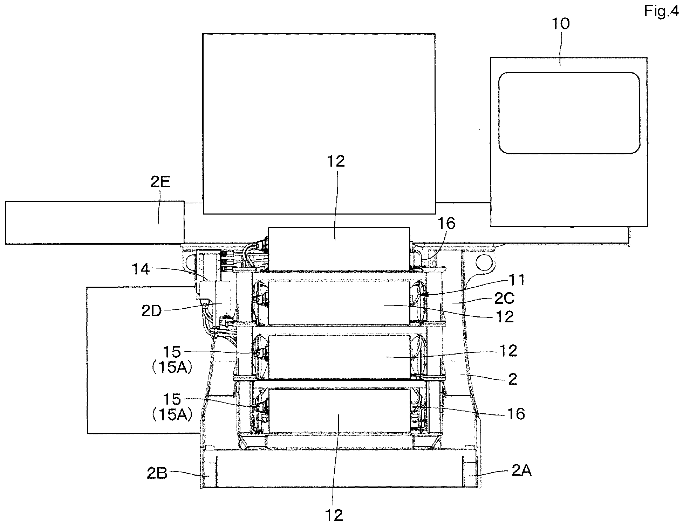

Here, as shown in FIG. 4, the left frame 2A, right frame 2B, left pillar 2C, right pillar 2D, and beam 2E are assembled into a rectangular frame structure when viewed from the front. That is, within the rectangular frame structure formed by the left frame 2A, right frame 2B, left pillar 2C, right pillar 2D, and beam 2E, a battery device 11 with cuboid battery modules 12 arranged in the longitudinal and vertical directions can be efficiently placed without gaps.

The left and right front wheels 3 constitute steering wheels rotatably attached to the front side of the vehicle body frame 2. On the other hand, the left and right rear wheels 4 (only the left side is shown) constitute drive wheels rotatably attached to the rear side of the vehicle body frame 2.

The travel drive device 5 rotationally drives the left and right rear wheels 4. The travel drive device 5 is connected to the left and right rear wheels 4. The travel drive device 5 rotates the left and right rear wheels 4 by reducing the rotational force of the travel electric motor with a reduction gear (both not shown) .

The load-carrying platform 6 is tiltably (pivotably) mounted on the vehicle body frame 2. The load-carrying platform 6 is a large container with a bottom, for example, with a total length exceeding 10 meters, for loading a large amount of mined crushed stones and the like. The load-carrying platform 6 is tiltably connected to the rear part of the vehicle body frame 2 at a rearward portion of its bottom in the longitudinal direction. The load-carrying platform 6 is rotated in the vertical direction by extending or compressing the hoist cylinder 7.

A front support member 8 is installed on the front side of the vehicle body frame 2. The front support member 8 is formed as a box-shaped container. Inside the front support member 8, battery modules 12 of the battery device 11 and the like are housed.

A deck 9 is installed on the upper side of the front support member 8. The deck 9 is formed in a flat plate shape extending in the horizontal direction. The deck 9 is supported from below by the left pillar 2C, right pillar 2D of the vehicle body frame 2, and the front support member 8.

The cab 10 is installed on the deck 9. The cab 10 defines an operating room for the operator to board. Inside the cab 10, an operator's seat, a steering handle, an accelerator pedal, a brake pedal, operation levers, switches, etc. (none of which are shown) are arranged.

Next, the mounting structure (arrangement) of the battery device 11, which is a characteristic part of this embodiment, will be described in detail.

The battery device 11 can store electric power drawn from a trolley system overhead wire using a current collector, for example. The electric power stored (charged) in the battery device 11 is used to drive the electric motor of the travel drive device 5. Therefore, the electric dump truck 1 can extend its operating time by increasing the size (capacity) of the battery device 11.

The battery device 11 is composed of the plurality of battery modules 12. The plurality of battery modules 12 are arranged between the left pillar 2C and the right pillar 2D of the vehicle body frame 2. One battery module 12 is equipped with a plurality of battery cells within a rectangular case. One longitudinal end of the battery module 12 (in this embodiment, the right end opposite the cab 10 in the lateral direction) serves as the electrical wiring connection part 12A for inputting and outputting electricity. The electrical wiring 15 is connected to the right-side electrical wiring connection part 12A.

On the other hand, the other longitudinal end of the battery module 12 (in this embodiment, the left end on the cab 10 side) serves as the temperature control liquid pipe connection part 12B for inputting and outputting temperature control liquid. The temperature control liquid pipe 16 is connected to the left-side temperature control liquid pipe connection part 12B.

The plurality of battery modules 12 are arranged to extend in the lateral direction. Specifically, the plurality of battery modules 12 are arranged in multiple rows in the longitudinal direction and in multiple stacks in the vertical direction, with the lateral direction as the long side direction. In this embodiment, the top stack battery modules 12 are arranged only on the front side from the middle part in the longitudinal direction. It should be noted that the configuration of the battery module 12 is not limited to the aforementioned case.

Here, the capacity (amount of chargeable electricity) of the battery device 11 is determined by the size and number of battery modules 12. The rectangular battery module 12 forms a rectangular shape as a whole, even when arranged in the longitudinal and vertical directions. Therefore, a large number of rectangularly assembled battery modules 12 can be arranged without gaps within the rectangular frame structure formed by the left frame 2A, right frame 2B, left pillar 2C, right pillar 2D, and beam 2E as viewed from the front.

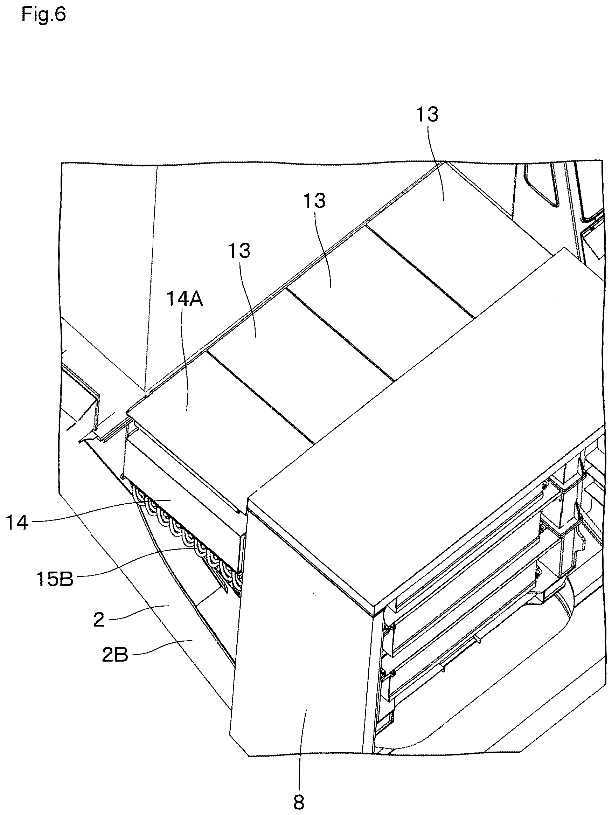

As shown in FIG. 6, the battery cover 13 covers the upper side of the battery device 11. The battery cover 13 is installed between the middle part in the longitudinal direction and the rear beam 2E of the battery device 11. The battery cover 13 is formed, for example, as a rectangular plate divided into three parts in the lateral direction. The battery cover 13 is detachable.

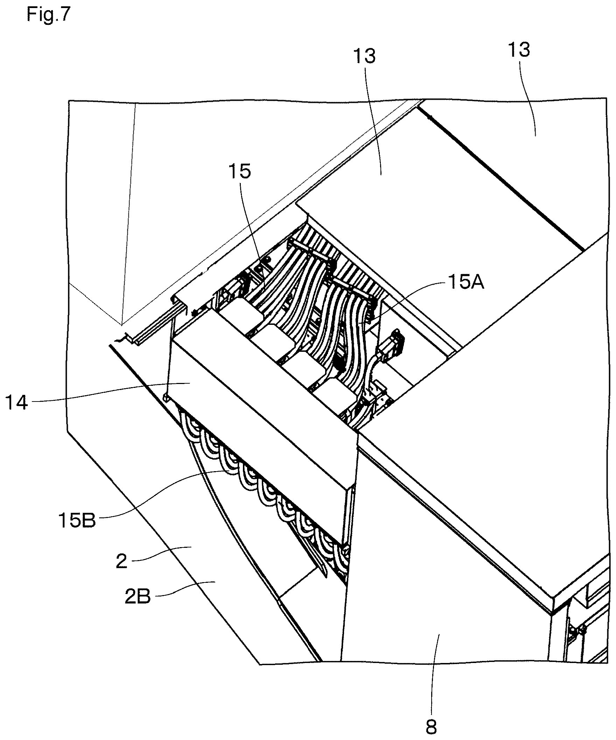

As shown in FIG. 7, the junction box 14 is installed on the right side, which is the side of the electrical wiring connection part 12A of the battery module 12. The junction box 14 is formed, for example, as a group of connectors connected in the longitudinal direction. The junction box 14 consolidates a plurality of electrical wirings 15 extending from the plurality of battery modules 12. Also, as shown in FIG. 6, a box cover 14A covering the upper side is installed on the junction box 14. The box cover 14A is located on the right side of the battery cover 13 and is detachable.

The plurality of electrical wirings 15 are configured to include the first electrical wiring 15A and the second electrical wiring 15B. The plurality of first electrical wirings 15A have one longitudinal end connected to the electrical wiring connection part 12A of the plurality of battery modules 12, and the other longitudinal end connected to the junction box 14. As a result, the plurality of first electrical wirings 15A are consolidated in the junction box 14.

Additionally, the plurality of second electrical wirings 15B are connected at one longitudinal end to the plurality of first electrical wirings 15A, which are consolidated in the junction box 14. On the other hand, the other longitudinal end of the plurality of second electrical wirings 15B is installed between the battery device 11 and the beam 2E of the vehicle body frame 2. Specifically, since the top stack battery modules 12 of the battery device 11 are arranged only on the front side from the middle part in the longitudinal direction, a gap is formed between the battery module 12 one level below and the beam 2E. The plurality of second electrical wirings 15B can be easily installed through the gap between the battery module 12 and the beam 2E.

The plurality of temperature control liquid pipes 16 are connected to the plurality of battery modules 12. Specifically, the plurality of temperature control liquid pipes 16 are connected to the temperature control liquid pipe connection part 12B located on the left side of the plurality of battery modules 12. The plurality of temperature control liquid pipes 16 are used for inputting and outputting cooling liquid to cool the battery modules 12 and heating liquid to warm the battery modules 12.

The electric dump truck 1 according to this embodiment has the above-described configuration, and its operation will be explained next.

First, in quarries such as mines, the excavated crushed stones and the like are loaded onto the load-carrying platform 6. Once a predetermined amount of crushed stone or similar material is loaded, the electric dump truck 1 is traveling towards the unloading site. During this travel, the electric power stored in the battery device 11 can be used.

Upon arrival at the unloading site, the operator in the cab 10 operates various levers to extend the hoist cylinder 7 and lift the front side of the load-carrying platform 6 upwards. This allows the electric dump truck 1 to discharge crushed stone and the like from the load-carrying platform 6 to the unloading site.

Here, the driving performance of the electric dump truck 1 is greatly affected by the capacity of the battery device 11. Namely, the electric dump truck 1 can extend its operating time (travel time) by being equipped with a large-capacity battery device 11.

Furthermore, in the battery device 11, the plurality of electrical wirings 15 are connected to the electrical wiring connection part 12A of the plurality of battery modules 12, and the plurality of temperature control liquid pipes 16 are connected to the temperature control liquid pipe connection part 12B. As a result, in conventional technology, when installing a battery device, the plurality of electrical wirings and temperature control liquid pipes become obstructive, making it impossible to install a large-capacity battery device.

However, according to this embodiment, the vehicle body frame 2 consists of a left frame 2A and a right frame 2B extending in the longitudinal direction, a left pillar 2C extending upwards from the left frame 2A, a right pillar 2D extending upwards from the right frame 2B, and a beam 2E extending in the lateral direction and attached across the upper parts of the left pillar 2C and the right pillar 2D. The battery device 11 is arranged with the plurality of battery modules 12 between the left pillar 2C and the right pillar 2D. In this configuration, the plurality of battery modules 12 have one longitudinal end serving as an electrical wiring connection part 12A for connecting electrical wiring 15, and the other longitudinal end serving as a temperature control liquid pipe connection part 12B for connecting a temperature control liquid pipe 16.

The area between the left pillar 2C and the right pillar 2D, that is, the area enclosed by the left frame 2A, right frame 2B, left pillar 2C, right pillar 2D, and beam 2E, is assembled into a rectangular frame structure when viewed from the front. Therefore, the battery device 11, in which the cuboid battery modules 12 are arranged in the longitudinal and vertical directions, can be efficiently arranged without gaps within the rectangular frame structure. This allows the vehicle body frame 2 to be equipped with a large-capacity battery device 11 (numerous battery modules 12), thereby extending the operating time of the electric dump truck 1.

Moreover, the battery device 11 arranges the plurality of battery modules 12 such that the electrical wiring connection part 12A is positioned on the right side and the temperature control liquid pipe connection part 12B is positioned on the left side. This allows the plurality of electrical wirings 15 and temperature control liquid pipes 16 to be neatly installed without causing any obstruction. As a result, it is possible to secure a large installation space for the battery device 11. In this regard, it is possible to increase the capacity of the battery device 11 to extend the operating time of the electric dump truck 1.

Additionally, a junction box 14 is installed on the electrical wiring connection part 12A side (right side) of the battery module 12. The plurality of electrical wirings 15 extending from the electrical wiring connection part 12A of the battery module 12 are connected to the junction box 14 and bundled, then installed between the battery device 11 and the beam 2E. This allows the plurality of electrical wirings 15 bundled in the junction box 14 to easily pass between the battery device 11 and the beam 2E, thereby improving workability during wiring.

Additionally, in the battery device 11, battery modules 12, which extend in the lateral direction, are arranged in multiple rows in the longitudinal direction and in multiple stacks in the vertical direction. On this basis, the top stack battery modules 12 are positioned only at the front side from the middle part in the longitudinal direction, and the electrical wiring 15 is installed between the second battery module 12, which is located at the rear side and one level lower, and the beam 2E. This allows for space to be secured between the second stack battery module 12 and the beam 2E, enabling the electrical wiring 15 to be easily installed using this space.

On the other hand, the electric dump truck 1 is further equipped with a battery cover 13 that covers the upper side of the battery device 11. This allows the interior of the battery device 11 to be protected when the battery cover 13 is attached. When the battery cover 13 is removed, the electrical wiring 15 and the temperature control liquid pipe 16 can be easily handled.

Furthermore, the electric dump truck 1 is further equipped with a box cover 14A that covers the upper side of the junction box 14. This allows the junction box 14 and the connection parts of the electrical wiring 15 to be protected when the box cover 14A is attached. With the box cover 14A removed, the electrical wiring 15 can be easily attached and detached from the junction box 14.

In the embodiment, the plurality of battery modules 12 constituting the battery device 11 are illustrated as being arranged in multiple rows in the longitudinal direction and multiple stacks in the vertical direction while extending in the lateral direction. However, the present invention is not limited to this, and for example, a configuration may be adopted in which the plurality of battery modules are arranged in multiple rows in the lateral direction and multiple stacks in the vertical direction, extending in the longitudinal direction.

### DESCRIPTION OF REFERENCE NUMERALS

1: Electric dump truck
2: Vehicle body frame
2A: Left frame
2B: Right frame
2C: Left pillar
2D: Right pillar
2E: Beam
11: Battery device
12: Battery module
12A: Electrical wiring connection part
12B: Temperature control liquid pipe connection part
13: Battery cover
14: Junction box
14A: Box cover
15: Electrical wiring
15A: First electrical wiring
15B: Second electrical wiring
16: Temperature control liquid pipe

## Claims

1. An electric dump truck comprising:
a battery device mounted on a vehicle body frame and including a plurality of battery modules arranged in the battery device, wherein
the vehicle body frame includes: left and right frames extending in a longitudinal direction; left and right pillars extending upward from the left and right frames; and a beam extending in a lateral direction and attached across a top of the left and right pillars,
the battery device is arranged such that the plurality of battery modules are positioned between the left and right pillars,
the plurality of battery modules have one longitudinal end serving as an electrical wiring connection part for connecting electrical wiring, and the other longitudinal end serving as a temperature control liquid pipe connection part for connecting liquid pipes for temperature control.

2. The electric dump truck according to claim 1, wherein
a junction box is installed on the electrical wiring connection part side of the battery module;
a plurality of electrical wirings extending from the electrical wiring connection part of the battery module are connected to the junction box, bundled, and then installed between the battery device and the beam.

3. The electric dump truck according to claim 2, wherein
the battery device is arranged such that the battery modules extending in the lateral direction are aligned in multiple rows in the longitudinal direction and in multiple stacks in the vertical direction;
the top stack battery modules are arranged only on the front side from the middle part in the longitudinal direction;
the electrical wiring is installed between the second stack battery module, which is positioned one stack lower on the rear side, and the beam.

4. The electric dump truck according to claim 1,
further comprising a battery cover that covers the upper side of the battery device.

5. The electric dump truck according to claim 2,
further comprising a box cover that covers the upper side of the junction box.
